Europäisches Patentamt

European Patent Office

Office européen des brevets

(11) Publication number: **0 137 736 B1**

# EUROPEAN PATENT SPECIFICATION

(45) Date of publication of patent specification: **21.10.92** (51) Int. Cl.5: **G02B 5/124**

(21) Application number: **84306198.7**

(22) Date of filing: **11.09.84**

The file contains technical information submitted after the application was filed and not included in this specification

(54) **Cube-corner retroreflective articles having wide angularity in multiple viewing planes.**

(30) Priority: **12.09.83 US 531349**

(43) Date of publication of application:
**17.04.85 Bulletin 85/16**

(45) Publication of the grant of the patent:
**21.10.92 Bulletin 92/43**

(84) Designated Contracting States:
**AT BE CH DE FR GB IT LI NL SE**

(56) References cited:
**DE-A- 1 472 494      DE-A- 2 419 629
US-A- 2 351 080      US-A- 2 380 447
US-A- 3 684 348      US-A- 3 712 706
US-A- 3 923 378**

(73) Proprietor: **MINNESOTA MINING AND MANU-
FACTURING COMPANY
3M Center, P.O. Box 33427
St. Paul, Minnesota 55133-3427(US)**

(72) Inventor: **Hoopman, Timothy L. c/o Minnesota
Mining and
Manufacturing Co. 2501 Hudson Road
P.O. Box 33427 St. Paul Minnesota 55133(US)**

(74) Representative: **Baillie, Iain Cameron
c/o Ladas & Parry, Altheimer Eck 2
W-8000 München 2(DE)**

## Description

Background Art

The basic cube-corner retroreflective element used in cube-corner retroreflective articles has a notoriously low angularity, i.e., the element will only brightly retroreflect light that impinges on it within a narrow angular range centering approximately on its optical axis. Low angularity arises by the inherent nature of these elements, which are trihedral structures having three mutually perpendicular lateral faces, such as occur at the corner of a cube. In use, the elements are arranged so that light to be retroreflected impinges into the internal space defined by the faces, and retroreflection of the impinging light occurs by internal reflection of the light from face to face of the element. Impinging light that is inclined substantially away from the optical axis of the element (which is the trisector of the internal space defined by the faces of the element) strikes a face at an angle less than its critical angle, thereby passing through the face rather than being reflected.

Some workers have addressed this problem by coating the trihedral faces of the cube-corner element with specularly reflective metal, e.g., vapor-deposited aluminum, to cause even highly inclined light to be reflected by the faces. But such coatings reduce overall reflection from the faces (because a percentage of light impinging on the faces is absorbed by the coating), and introduce a gray color to the element which is often objectionable. Also the coatings could be susceptible to corrosion problems that would limit the useful life of an article having such elements.

Others have addressed the problem by arranging a second retroreflective plate or sheet in back of a first retroreflective plate or sheet (see Weber, U.S. Pat. 3,140,340, McGrath, U.S. Pat. 4,025,159, or Jones, U.S. Pat. 4,303,305), but such an approach is expensive and provides a thick and generally rigid construction not suited for many uses.

Others have addressed the problem by attempting to change the configuration of the cube-corner retroreflective elements, but none of these efforts has provided a practically manufactured sheeting suitable for the most common uses of retroreflective sheeting (e.g., on traffic signs, license plates, advertising signs, etc.). For example, White, U.S. Pat. 4,349,598 teaches a limited-use broader-angularity retroreflective sheeting obtained by tilting the central axes of the cube-corner elements to an approximately 35-degree angle and joining two adjacent elements into a right triangle prism or "pup-tent"-like configuration. Such cube-corner retroreflective elements achieve retroreflection of light having incidence angles (the angle between the incident light and a line perpendicular to the sheeting) approaching 90°, which makes them useful particularly for pavement markings or the like. But O°-incidence angle light (light that is perpendicular to the sheeting) is not reflected, and accordingly the sheeting is not useful for conventional traffic signs.

The desire for a thin pliable cube-corner retroreflective sheeting that would reflect inclined light is recognized in Haggerty, U.S. Pat. 3,450,459, but the patent teaches no practical method for achieving such a result. Thin pliable sheeting requires that the cube-corner elements be of very small "microsizes," which so far as known, have only been accomplished by grooving techniques for which the elements taught in Haggerty are not adapted.

Prior efforts have also been made to increase the angular range of reflector plates that use larger cube-corner retroreflective elements, such as the reflector plates mounted on vehicles. The molds for such reflector plates are generally made by bundling together individual mold parts, typically pins which each have an end portion shaped like a cube-corner retroreflective element. Heenan et al, U.S. Pat. 3,541,606, teaches reflector plates for vehicles containing cube-corner retroreflective elements arranged into discrete, rather large groups. The optical axes of the cube-corner elements in each group are inclined at angles different from the angles of the elements of a different group so as to increase the angular range of reflection in a horizontal plane around a vehicle. Heenan, U.S. Pat. 3,923,378 and Heenan, U.S. Pat. Re. 29,396 teach an improvement in which the cube-corner retroreflective elements are arranged in rows, and the optical axes of the cube-corner elements of one row are inclined towards the elements of the other row, for example, in an amount between about 6 and 13° (see column 5, line 45 et seq. of U.S. Pat. 3,923,378). Such tilting is intended to increase the angularity of the reflector plate in a predetermined plane (see column 5, lines 64 and 65), which is typically the horizontal plane around a vehicle. Lindner, U.S. Pat. 4,066,331, has a similar objective with cube-corner retroreflective elements arranged in rows, as does US-A-2 380 447 on which the pre-characterizing part of claim 1 of this invention is based. In US-A-2 380 447 the reflecting surface also has an increased angularity in one plane and may be utilized in a sign located at road intersections and at curves in a road. The increased angularity is produced by tilting the optical axis of each cube-corner element away from one edge of the element.

The noted improvement as to the angularity of reflector plates in one plane, such as the horizontal

2

plane around a vehicle, has less value for other kinds of retroreflective articles. Retroreflective sheeting, in particular, is generally intended for use on large-area surfaces that are viewed over their whole surface and from many angles. For reflective sheeting used on sign faces it is important to maintain a uniform brightness over the whole surface of the sheeting irrespective of the viewing angle, so that the whole sign has uniform brightness, and so that the legends or symbols on the sign are legible. Legibility requires control of the contrast between the graphic images and background area of the sign and such control of contrast requires uniformity in reflective brightness over the whole viewing surface.

Disclosure of Invention

According to the present invention there is provided a new cube-corner thin flexible retroreflective sheeting which exhibits wide retroreflective angularity in multiple viewing planes, and which is based on cube-corner retroreflective elements that can be adapted for manufacture in microsizes.

In brief summary, a new retroreflective sheeting comprises a multitude of closely spaced cube-corner retroreflective elements, the three mutually perpendicular lateral faces of each element being defined at their bases by linear edges that lie in a common plane so that the base of each element constitutes a triangle, the bases of all the elements being positioned in a common plane with all the apices of the cube-corner elements positioned on the same side of this plane, the elements being arranged in pairs, the two elements in each pair being positioned next to each other and having one of their linear edges in common, each element having an optical axis defined as the trisector of the internal angle defined by the three lateral faces of the cube-corner element, the optical axes of the elements in each pair being tilted in relation to one another such that for each element in the pair of elements the distance between the apex of the element and a plane, defined by the fact that it contains said common edge and that it is perpendicular to the bases, is larger than the distance between said plane and the point of intersection between the optical axis and the base plane.

It has been found that such "matched" pairs of tilted cube-corner elements produce a wide retroreflective angularity not only in a plane that is perpendicular both to the common plane and the edge toward which the optical axis of an element is tilted, but also in a plane that is perpendicular to that plane and the common plane. Further, such pairs have good angularity in planes intermediate to those two planes, ie., throughout a full 360°- range of viewing planes.

The direction of tilt of the optical axis in the present invention is also found in document US-A-3 923 378. It does not, however, achieve the advantage of the present invention. Preferably, for sheeting made from polymeric material having indices of refraction of about 1.5, the axes of the pair of elements are tilted to an angle between about 7 and slightly less than 10 degrees from a position perpendicular to the common plane in which the base edges of the lateral faces lie.

As noted above, tooling for molding thin flexible cube-corner retroreflective sheeting has previously been made by grooving techniques. In these techniques a master plate is grooved with three sets of parallel V-shaped grooves that intersect to form cube-corner elements (see Erban, U.S. Pat. 3,057,256 and Stamm, U.S. Pat. 3,712,706). Since the present invention uses cube-corner elements having full triangular lateral faces, with base edges in a common plane, they may be formed by such grooving techniques, with the stated common plane being established by the bottom edges of the grooves.

Brief Description of Drawings

Figure 1 is a perspective view showing a cube-corner retroreflective element used in retroreflective sheeting embodying the invention;
Figures 2a, 2b, and 2c are side elevational views of the lateral faces of the cube-corner element shown in Figure 1;
Figure 3 is a plan view of a representative retroreflective sheeting with a dense array of cube-corner elements as pictured in Figures 1 and 2;
Figure 4A and 4B are sectional views taken along the lines 4A-4A and 4B-4B of Figure 3 showing particularly two representative matched pairs of cube-corner elements in retroreflective sheeting;
Figure 5 is a sectional view taken along the lines 5-5 of Figure 4A;
Figure 6 is a graph of isobrightness curves for a representative matched pair of cube-corner elements, showing the percentage of the maximum retroreflection from such a pair of cube-corner elements that is retained when the light being retroreflected impinges on the elements at increasing incidence angles, i.e., at angles displaced from a line perpendicular to the base plane of the elements; the magnitude of the incidence angle is represented by the radial distance of a point on the curve from the origin of the graph

3

and the rotational plane of the incidence angle is represented by the angular position of a point on the curve; and

Figure 7 is a graph of isobrightness curves measured for a representative retroreflective sheeting embodying the invention.

Best Mode for Carrying Out the Invention

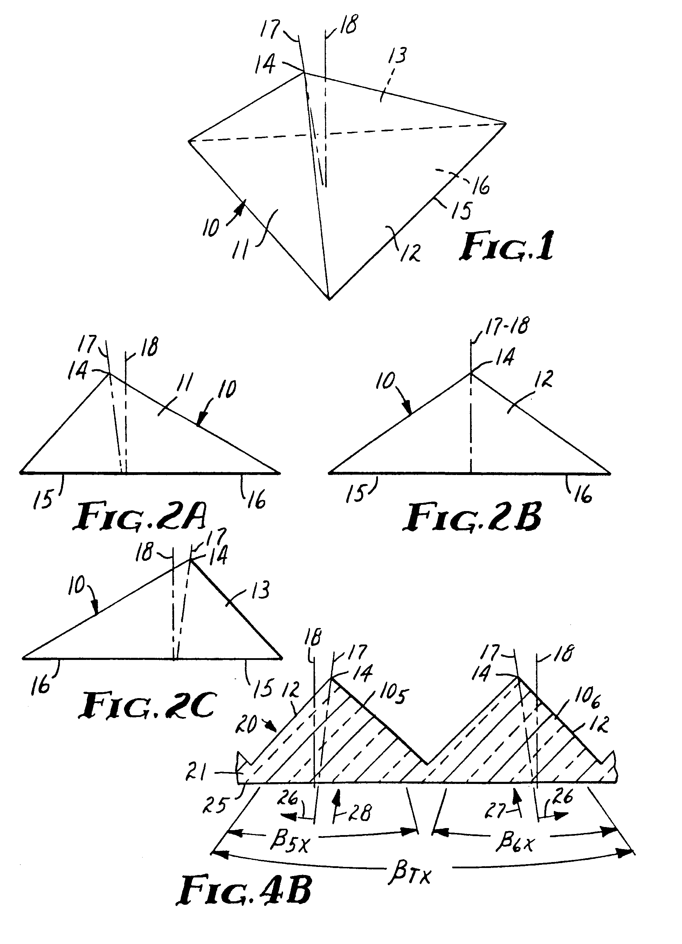

A cube-corner retroreflective element useful in a retroreflective sheeting is shown in perspective view in Figure 1 and in side elevation views in Figures 2a, 2b, and 2c. As shown, the element 10 has three mutually perpendicular lateral faces 11, 12, and 13 which meet at the apex 14. The base edges 15 of the lateral faces 11, 12, and 13 are linear and lie in a single plane, i.e., the base plane 16 of the element. The element 10 also has a central or optical axis 17, which is a trisector of the internal angle defined by the lateral faces 11, 12, and 13 and which is tilted with respect to a line 18 perpendicular to the base plane 16. Retroreflection will occur when light incident on the base plane 16 of the element is internally reflected by one of the three lateral faces to a second face, then to a third face, and then back through the base toward the source of light.

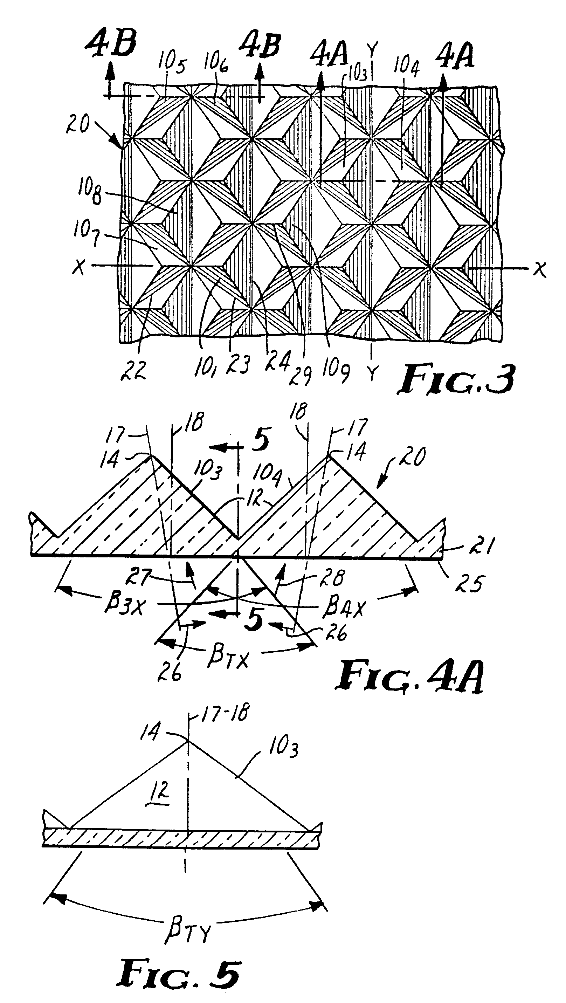

A cube-corner element as shown in Figure 1 and 2 is generally used with at least one other cube-corner element as part of a matched pair, and commonly is used with an array of such elements. The other cube-corner elements as they might appear in such an array of elements are shown in plan view in Figure 3, which pictures the back of a representative retroreflective sheeting 20. The elements are joined together, e.g by being formed as a part of a single integral sheeting material or by being attached at their base plane 16 to a carrier film. Figure 4 shows in section view a portion of the sheeting pictured in Figure 3, and shows a thickness 21 of material, such as a polymeric film, connecting the elements together. Because the base edges 15 of the element 10 are linear and in a common plane, an array of such elements is defined by intersecting sets of grooves. Element $10_1$ in Figure 3 is defined by three V-shaped grooves 22, 23, and 24, which are each one member of three sets of grooves which cross the array in an intersecting pattern.

As seen from Figures 3, 4A, 4B, and 5, the cube-corner elements in the illustrated representative retroreflective sheeting can be considered as being arranged in pairs, with the optical axes of the elements in each pair being tilted or canted toward one edge of the elements, when considered from the front surface 25 of the sheeting 20 on which light to be retroreflected impinges. Figure 4A shows one such pair, $10_3$ and $10_4$, in which the edge toward which the optical axes 17 of the elements have been tilted or canted, i.e., in the direction of the arrows 26 in Figure 4A, is a common edge. The cube-corner elements of the pair are identical, but they face in opposite directions, i.e., one is rotated 180° about the line 18 from the orientation of the other.

Other elements in the array pictured in Figure 3 can be considered a pair besides the pair of Figure 4A which abut at a common edge. Thus, elements $10_5$ and $10_6$ shown in Figure 4B are also a matched pair, even though they abut at a point rather than an edge. They are such a pair, since they are identical except for being rotated 180° from one another. The optical axes of the elements $10_5$ and $10_6$ are tilted toward one edge, which is a matching edge in each element (i.e., upon rotation of one of the elements $10_5$ and $10_6$ in an amount of 180°, the edges toward which the optical axes are tilted would coincide).

The optical axes of the pairs of elements $10_3$ and $10_4$, and of $10_5$ and $10_6$, are in a single plane, but it should be noted that a pair of elements could have their axes in different planes. For example, the elements $10_7$ and $10_8$ in Figure 3 can be considered as a pair. Whichever pair in Figure 3 is considered, however, the tilting of the optical axes of the elements in the pair occurs in the same plane or in parallel planes, identified as the X-axis planes in Figure 3.

The angular range of retroreflection from the tilted cube-corner elements of a pair combine to provide a broad angularity of reflection. The tilting of the elements in the X-axis plane shown in Figure 3 shifts the angular range of reflection in that plane from being centered on a line perpendicular to the front surface of the sheeting 20 to being centered on paths represented by the light rays 27 and 28 in Figures 4A and 4B. Each tilted cube-corner element 10 retroreflects with maximum brightness light that is incident on the sheeting 20 on a path represented by light rays 27 and 28. And each element retroreflects with gradually reduced brightness light that is incident on the sheeting 20 on paths further displaced from the paths 27 and 28. The angular ranges of reflection are arbitrarily represented by the ranges $\beta_{3X}$, $\beta_{4X}$, $\beta_{5X}$, and $\beta_{6X}$ in tile drawings (actually, there is no sharp delineation of a range, but instead a gradual reduction in the brightness of retroreflection). As shown, one end of each of these ranges is more inclined than the other end of the range, indicating that more highly inclined light is reflected at that end of the range than at the other end. The more inclined ends of the range represent the ends of the combined ranges of reflection from a pair of elements, and the combined range is represented by $\beta_{TX}$. The tilted elements combine to

4

provide a broad angular range of retroreflection $\beta_{TX}$ in the X-axis plane, which is substantially larger than the representative ranges $\beta_{3X}$ and $\beta_{4X}$ or $\beta_{5X}$ and $\beta_{6X}$ provided by the individual elements.

More than achieving a broadened angular range in the X-axis plane, however, it has now been found that the tilted elements also achieve a substantial increase in angular range in a Y-axis plane that is perpendicular to the X-axis plane (and to the base plane of the elements). Also, there is a substantial increase in angular range in planes intermediate the two perpendicular X and Y planes. As shown in Figure 5, the angular range $\beta_{TY}$ of retroreflection in the Y-axis plane perpendicular to the X-axis plane is increased to a surprisingly large amount by the tilting of the elements, even though that tilting occurs in the X-axis plane.

This result is further illustrated in Figure 6 which is a set of isobrightness curves plotting the magnitude of retroreflection obtained from cube-corner elements as used in retroreflective sheeting (as described in Example 1 herein). The magnitude of retroreflection is plotted versus the magnitude of the incidence angle of the light being reflected (the angle between the incident light and a line perpendicular to the front face of the sheeting). Values plotted on the X-axis in Figure 6 represent the magnitude of reflection for light incident on the elements in X-axis planes parallel to the planes defined by the optical axes of the elements; values plotted on the Y-axis are for light incident on the sheet in Y-axis planes perpendicular to the X-axis planes defined by the optical axes of the elements; and values plotted at points between the X and Y axes are for light incident on the elements in planes intermediate the perpendicular X and Y planes.

As may be seen, for the particular measurements reported in Figure 6, the cube-corner elements reflect at 50% of maximum retroreflective brightness light that impinges on the elements in the X-axis plane at about 40° (the "half-brightness angle"), and reflect at 50% brightness light that impinges on the elements in the Y-axis plane at about 35°. Such an angular range in retroreflective brightness along two perpendicular planes is far beyond any range previously known to be obtained in a cube-corner retroreflective sheeting. As is also seen from Figure 6, good retroreflective brightness is also obtained in planes intermediate the perpendicular planes.

Computer simulations of cube-corner designs based on designs of the invention indicate that, for best results, the optical axes of each pair of cube-corner elements abutting at a common edge lie in a single plane perpendicular to the edge and to the base plane. However, in other embodiments, the optical axes may be tilted in two directions, e.g., toward one edge as well as out of a plane that is perpendicular to the edge and the base plane.

The greatest improvement in angular range along the X-axis plane is obtained with the greatest amount of tilting of the optical axes, but at some degree of tilting, which varies with index of refraction of the materials of the retroreflective sheeting, the retroreflection of light that is perpendicular to the sheeting (i.e, 0°-incidence-angle light) begins to decline rapidly. The degree of tilting which provides optimum angularity is generally an angle just short of the angle at which perpendicular retroreflection begins to decline rapidly. For materials having an index of refraction of 1.5 this angle is about 12-13°, and it varies with the index of refraction ($\eta_D$) according to the following formula:

$$\theta = 54.736 - \sin^{-1}\left(\frac{\eta_{air}}{\eta_D}\right)$$

The optimum angle of tilting is also affected by the desired manufacturing technique, as well as by related questions as to desired areal density of cube-corner elements, and desired efficiency of reflection. For manufacturing techniques using a grooved master, the degree of tilting is limited by the fact that if the groove between matched pairs of elements abutting at a common edge (e.g., the groove 24 in Figure 3) is of too large an angle, the grooving tool will remove portions of edges of adjacent elements that abut the groove on either side of the matched pair of elements. This fact can be illustrated in Figure 3 by reference to cube-corner element $10_9$, which abuts groove 24 and is adjacent to a matched pair of elements. If the degree of tilting of the elements pictured in Figure 3 is increased beyond a certain angle, which is found to be 9.736° for an array as shown in Figure 3 in which the optical axes of a matched pair of elements lie in a common plane, the angle of the groove 24 increases to such an extent that the edge 29 of element $10_9$ would penetrate into the groove. Thus the grooving tool forming the groove 24 removes a portion of the element $10_9$ (and similar elements abutting groove 24) at the edge 29.

Removal of a portion of the elements abutting groove 24 can be avoided by separating cube-corner elements, e.g., by forming the bottom of grooves 22 and/or 23 with a flat area or trough. Such a separation reduces the magnitude of retroreflection, since there are then fewer cube-corner elements per unit area of sheeting, but the separation has other advantages such as allowing an underlying substrate (which may have a desired color, for example) to be viewed through the flat area of the bottom of the groove, or allowing transmission of light through the flat area (as when a sheeting of the invention is used as the front plate of an internally illuminated sign).

Also, removal of a portion of an adjacent element, and the accompanying loss of retroreflection, can be acceptable under some circumstances when the total magnitude of retroreflection is otherwise sufficient.

Somewhat greater retroreflection of 0°-incident light can be obtained with a degree of tilting less than the optimum for Y-axis angular range, but generally, for materials having an index of refraction of 1.5, the degree of tilting will be at least 7°, and will vary with index of refraction according to the above-stated formula. For 1.6-index materials, the degree of tilting will generally lie within the range of 9-15°, preferably 10-13° for articles having flat-bottomed grooves between elements, and otherwise preferably less than 9.736°.

Sheeting may be made as an integral material by embossing a preformed sheet with a described array of cube-corner elements, or casting a fluid material into a mold; or they may be made as a layered product, e.g., by casting the elements against a preformed film as taught in U.S. Pat. 3,684,348, or by laminating a preformed film over the front face of individual molded elements.

Acrylics, which generally have an index of refraction of about 1.5, are one useful material for an integral sheet material, or they are useful as a facing adhered over the cube-corner retroreflective elements in a layered product to obtain good outdoor weathering properties. Other useful materials include polycarbonates, which have an index of refraction of about 1.6, reactive materials such as taught in United Kingdom Pat. 2,027,441; polyethylene-based ionomers (marketed under the name of "SURLYN"), polyesters, and cellulose acetate butyrates. Generally any transparent material that is formable typically under heat and pressure may be used.

Retroreflective sheeting may incorporate cube-corner elements in a wide range of sizes. For flexible sheeting (for example, rollable around a three-inch-diameter (7.5-centimeter-diameter) core), the elements preferably have a size (i.e., spacing between the center lines of grooves) less than about 0.025 inch (0.625 millimeter). The most common rigid cube-corner retroreflective articles use cube-corner elements of a size of about 0.060 to 0.100 inch (1.5 to 2.5 millimeters). However, the beneficial increased angularity offered by the invention will also occur with larger sizes. For example, the effects achieved by the invention are illustrated in the examples below by using macro-sized glass cube-corner retroreflective elements.

Since sheeting is typically used by adhering it to a substate, and since it is desired to maintain an air interface at the three lateral mutually perpendicular surfaces of the cube-corner elements, the sheeting is preferably sealed to a back film in a cellular pattern such as taught in U.S. Pat. 4,025,159. A variety of heat-activated, solvent-activated, pressure-sensitive or other adhesives may then be coated on or laminated to the back surface of the sealing film for use in adhering the sheeting to a substrate. Other structure may also be added to a retroreflective sheeting, such as specularly reflective coatings over the mutually perpendicular lateral faces of the elements, and protective films over the front face of a retroreflective sheeting e.g., to improve weathering properties.

The invention will be further illustrated by the following examples.

### Example 1

A series of large cube-corner retroreflective elements were machined from glass. These glass bodies were tetrahedrons, having three mutually perpendicular lateral faces and a bottom or base face. The latter face was at a different angle in each element of the series so as to place the optical axes of the different elements at different angles. The base edges of the lateral faces of the elements were between about 1-1/2 and 2 inches (3.8 to 5 centimeters) in length. Some of the elements or bodies in the series were machined from glass having an index of refraction of 1.5 and some from glass having an index of refraction of 1.6. Four different elements of each index of refraction were prepared. The optical axes of the different 1.5-index elements were tilted toward one edge in a plane perpendicular to that edge respectively 7.2°, 9.2°, 11.3°, and 13.6°. The different 1.6-index elements were tilted respectively 9.2°, 11.3°, 13.6° and 18.1°. Total light return in a 2-degree-radius cone was then measured for each of the elements by conventional darkroom photometry techniques. To determine the amount of light that would be returned by a matched pair of the elements, the measured data for an element was mathematically summed with the data that such an element would provide if rotated 180°. Isobrightness curves were drawn using such a summation of data for the 1.5-index 9.2°-tilt elements and are shown in Figure 6. The results for the other elements are shown in Table I.

TABLE I

Mathematical sum of retroreflection
from matched pairs of macro-sized
cube-corner elements which differ as to
index of refraction and angle of tilt

| Incidence angle | 1.5-index Tilt angle | | | | 1.6-index Tilt angle | | | |
|---|---|---|---|---|---|---|---|---|
| | 7.2° | 9.2° | 11.3° | 13.6° | 9.2° | 11.3° | 13.6° | 18.1° |
| | (normalized percent of brightest retroreflection) | | | | | | | |
| X-axis | | | | | | | | |
| 0 | 100 | 100 | 100 | 54 | 100 | 100 | 100 | 56 |
| 5 | 97 | 98 | 64 | 67 | 100 | 98 | 72 | 52 |
| 10 | 73 | 69 | 64 | 72 | 99 | 72 | 70 | 56 |
| 20 | 60 | 67 | 72 | 87 | 68 | 75 | 82 | 68 |
| 30 | 52 | 62 | 69 | 93 | 62 | 74 | 87 | 79 |
| 40 | 39 | 50 | 59 | 83 | 51 | 63 | 80 | 77 |
| 50 | 24 | 33 | 41 | 63 | 35 | 46 | 62 | 64 |
| Y-axis | | | | | | | | |
| 0 | 100 | 100 | 100 | 54 | 100 | 100 | 100 | 56 |
| 5 | 97 | 99 | 98 | 56 | 99 | 99 | 99 | 62 |
| 10 | 94 | 96 | 95 | 85 | 96 | 95 | 95 | 100 |
| 20 | 82 | 82 | 81 | 90 | 84 | 82 | 81 | 85 |
| 30 | 63 | 62 | 60 | 64 | 65 | 61 | 58 | 59 |
| 40 | 7 | 24 | 31 | 32 | 42 | 36 | 31 | 29 |
| 50 | 1 | 2 | 2 | 2 | 8 | 13 | 7 | 5 |

Example 2

A diamond-shaped flat acrylic plate having a 6-inch axial length was cut with three intersecting sets of parallel V-shaped grooves using a diamond-tipped tool. Two sets of the grooves intersected at an angle of 70°. These grooves were cut with a tool having an included angle of 60°, 36 minutes, and were spaced on 0.012-inch (0.305 millimeter) centers. The third set of grooves intersected the first two sets of grooves at an angle of 55°. Individual grooves of the third set were in line with the points of intersection of the grooves of the first two sets. The grooves in the third set were cut using a tool having an included angle of 88°, 51 minutes at a spacing of 0.0105-inch (0.254 millimeter).

The described grooving provided an array of cube-corner elements arranged in pairs with the optical axes of each element of a pair being tilted towards one another through an angle of 9.2°, i.e., 9.2° from a line perpendicular to the face of the acrylic plate.

An electroform was made from the grooved plate by electrolytic deposition of nickel onto the plate, and the electroform was used as a stamper to emboss the pattern of the electroform into a preformed 0.030-

7

inch-thick (750 micrometers) acrylic film having an index of refraction of about 1.49. The electroform was placed in a platen press and the pressing was done at a temperature of 350 to 400°F.

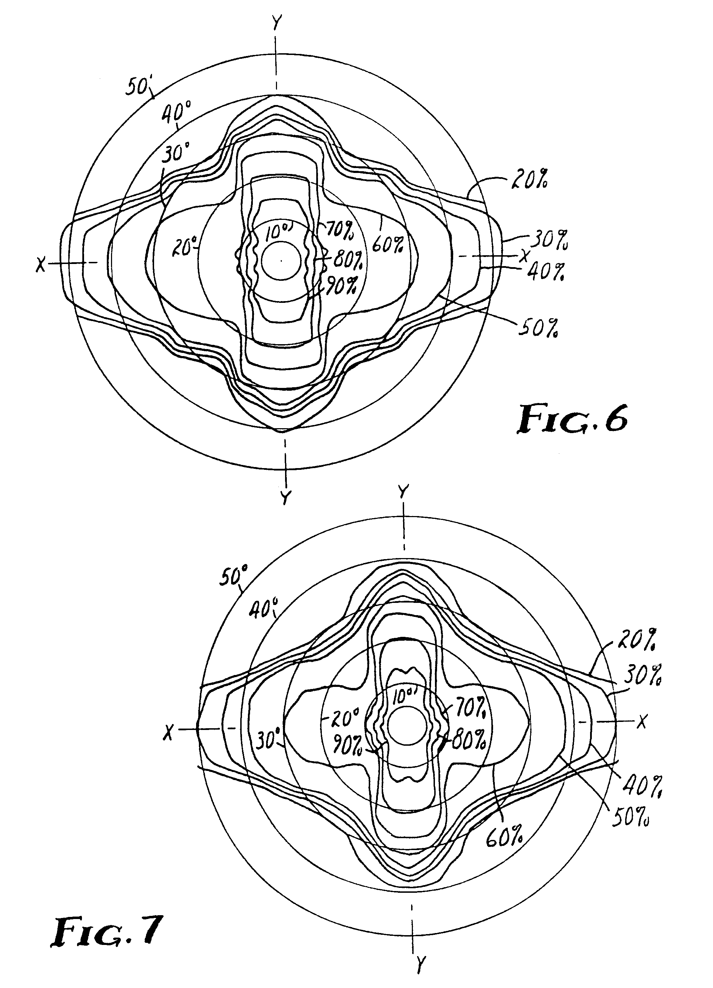

The total light retroreflected in a 2-degree-radius cone by the stamped retroreflective sheeting was then measured for light impinging on the sheeting at various incidence angles by darkroom photometry techniques. The results are shown in Figure 7 as a set of isobrightness curves presenting retroreflective brightness as a percentage of maximum brightness and as a function of the magnitude and rotational plane of the incidence angle. Figure 7 is seen to correlate well with the results presented in Figure 6.

**Claims**

1.  Thin flexible retroreflective sheeting, said sheeting comprising a multiple of closely spaced cube-corner retroreflective elements (10), the three mutually perpendicular lateral faces (11, 12, 13) of each element being defined at their bases by linear edges (15) that lie in a common plane (16) so that the base of each element constitutes a triangle, the bases of all the elements being positioned in a common plane (16) with all the apices (14) of the cube-corner elements (10) positioned on the same side of this plane, the elements being arranged in pairs ($10_3$, $10_4$), the two elements in, each pair being positioned next to each other and having one of their linear edges in common, each element having an optical axis (17) defined as the trisector of the internal angle defined by the three lateral faces of the cube-corner element, the optical axes of the elements in each pair being tilted in relation to one another;
    **characterized in that**
    for each element in the pair of elements the distance between the apex (14) of the element and a plane, defined by the fact that it contains said common edge and that it is perpendicular to the bases (16), is larger than the distance between said plane and the point of intersection between the optical axis (17) and the base plane (16).

2.  Sheeting according to claim 1 in which the cube-corner retroreflective elements comprise material having an index of refraction of about 1.5, and the optical axes of the pair of elements are each tilted to an angle between about 7 and 13 degrees from a position perpendicular to said common plane in which the base edges of the lateral faces lie.

3.  Sheeting according to claim 2, in which said tilt angle is between 8 and 9.736 degrees.

4.  Sheeting according to claim 1, 2 or 3 in which the optical axes of the pair of cube-corner retroreflective elements are coplanar.

5.  Sheeting according to any of claims 1-4 wherein the three mutually perpendicular lateral faces of the elements are formed by three sets of intersecting continous grooves having a common depth and a V-shaped cross-section so that the base edges of the lateral faces of the elements lie in a common plane established by the bottom of the grooves.

**Patentansprüche**

1.  Dünnes flexibles retroreflektierendes Folienmaterial, das eine Vielzahl von dichtstehenden retroreflektierenden Würfeleckenelementen (10) umfaßt, wobei die drei zueinander senkrechten Seitenflächen (11, 12, 13) jedes Elements an ihren Grundlinien von in einer gemeinsamen Ebene (16) liegenden geradlinigen Rändern (15) begrenzt sind, sodaß die Grundfläche jedes Elements ein Dreieck bildet, und wobei die Grundflächen aller Elemente in einer gemeinsamen Ebene (16) liegen und die Scheitel (14) der Würfeleckenelemente (10) auf derselben Seite dieser Ebene angeordnet sind, die Elemente in Paaren ($10_3$, $10_4$) angeordnet sind, die beiden Elemente jedes Paares nebeneinanderliegen und einen ihrer geradlinigen Ränder gemeinsam haben, jedes Element eine optische Achse (17) aufweist, die als der Trisektor des von den drei Seitenflächen des Würfeleckenelements bestimmten Innenwinkels definiert ist, und die optischen Achsen der Elemente in jedem Paar in bezug aufeinander geneigt sind, dadurch gekennzeichnet, daß bei jedem Element in dem Elementenpaar die Entfernung zwischen dem Scheitel (14) des Elements und einer Ebene, die dadurch bestimmt ist, daß sie den genannten gemeinsamen Rand enthält und zu den Grundflächen (16) senkrecht ist, größer ist als die Entfernung zwischen der genannten Ebene und dem Schnittpunkt zwischen der optischen Achse (17) und der Grundflächenebene (16).

**2.** Folienmaterial nach Anspruch 1, bei welchem die retroreflektierenden Würfeleckenelemente Material mit einem Brechungsindex von etwa 1,5 enthalten und die optischen Achsen des Elementenpaares jeweils um einen Winkel zwischen etwa 7 und 13 Grad in bezug auf eine zu der genannten gemeinsamen Ebene, in der die Grundlinienränder der Seitenflächen liegen, senkrechte Stellung geneigt sind.

**3.** Folienmaterial nach Anspruch 2, bei welchem der genannte Neigungswinkel zwischen 8 und 9,736 Grad beträgt.

**4.** Folienmaterial nach Anspruch 1, 2 oder 3, bei welchem die optischen Achsen des Paares von retroreflektierenden Würfeleckenelementen in einer Ebene liegen.

**5.** Follenmaterial nach irgendeinem der Ansprüche 1 bis 4, bei welchem die drei zueinander senkrechten Seitenflächen der Elemente durch drei Scharen einander schneidender durchgehender Nuten gebildet sind, die eine gleiche Tiefe und einen V-förmigen Querschnitt aufweisen, sodaß die Grundlinienränder der Seitenflächen der Elemente in einer gemeinsamen, von dem Grund der Nuten festgelegten Ebene liegen.

**Revendications**

**1.** Matériel en feuille rétroréfléchissant, flexible, mince, ce matériel comprenant une multitude d'éléments rétroréfléchissants (10), étroitement espacés, en coin de cube, les trois faces latérales (11, 12, 13) mutuellement perpendiculaires de chaque élément étant délimitées à leurs bases par des bords linéaires (15) qui se situent dans un plan commun (16), de sorte que la base de chaque élément constitue un triangle, les bases de tous les éléments étant disposées dans un plan commun (16), tous les sommets (14) des éléments en coin de cube (10) étant disposés du même côté de ce plan, les éléments étant agencés par paires ($10_3$, $10_4$), les deux éléments de chaque paire étant disposés l'un à côté de l'autre et présentant en commun un de leurs bords linéaires, chaque élément comportant un axe optique (17) défini comme étant le trisecteur de l'angle interne formé par les trois faces latérales de l'élément en coin de cube, les axes optiques des éléments de chaque paire étant inclinés l'un par rapport à l'autre, caractérisé en ce que, pour chaque élément de la paire des éléments, la distance entre le sommet (14) de l'élément et un plan, défini par le fait qu'il contient le bord commun susdit et qu'il est perpendiculaire aux bases (16), est supérieure à la distance entre ce plan et le point d'intersection entre l'axe optique (17) et le plan de base (16).

**2.** Matériel en feuille suivant la revendication 1, dans lequel les éléments rétroréfléchissants en coin de cube comprennent une matière présentant un indice de réfraction d'environ 1,5, et les axes optiques de la paire d'éléments sont inclinés chacun d'un angle compris entre environ 7 et 13° par rapport à une position perpendiculaire au plan commun susdit, dans lequel se situent les bords de base des faces latérales.

**3.** Matériel en feuille suivant la revendication 2, dans lequel l'angle d'inclinaison susdit est compris entre 8 et 9,736°.

**4.** Matériel en feuille suivant la revendication 1, 2 ou 3, dans lequel les axes optiques de la paire d'éléments rétroréfléchissants en coin de cube se situent dans un même plan.

**5.** Matériel en feuille suivant l'une quelconque des revendications 1 à 4, dans lequel les trois faces latérales des éléments, mutuellement perpendiculaires, sont formées par trois jeux de rainures continues se recoupant, présentant une profondeur commune et une section transversale en forme de V, de sorte que les bords de base des faces latérales des éléments se situent dans un plan commun créé par le fond des rainures.

FIG.1

FIG.2A

FIG.2B

FIG.2C

FIG.4B

FIG.3

FIG. 4A

FIG. 5

11

FIG.6

FIG.7